# EUROPEAN PATENT SPECIFICATION

(11) **EP 2 332 011 B1**
(45) Date of publication and mention of the grant of the patent: **26.12.2012**
(21) Application number: 09807960.1
(22) Date of filing: 18.08.2009
(51) Int. Cl.: G02B 27/02, G03B 21/12

(54) **DEVICE FOR DISPLAYING PANORAMA**
VORRICHTUNG ZUR PANORAMAANZEIGE
DISPOSITIF D'AFFICHAGE DE PANORAMA

(30) Priority: 18.08.2008 HU 0800521
(43) Date of publication of application: 15.06.2011
(73) Proprietor: Holakovszky, László, 2314 Halásztelek (HU); Szentgali, Adám, 1014 Budapest (HU)
(72) Inventor: Holakovszky, László, 2314 Halásztelek (HU); Szentgali, Adám, 1014 Budapest (HU)
(74) Representative: Harangozo, Gabor
(86) International application number: PCT/HU2009/000078
(87) International publication number: WO 2010/020824

(56) References cited:
- WO-A-93/10475
- WO-A1-93/10475
- WO-A1-98/10323
- WO-A1-99/39237
- FR-A1- 2 328 211
- GB-A- 524 308
- SU-A1- 832 518
- US-A- 5 153 716
- US-A- 5 153 716

## Description

The invention relates to a device for displaying panorama.

The panoramic pictures aimed at recording and presenting the highest possible space segment at the same time. As a general rule, a picture reaching or exceeding 100° horizontal visual angle is called panoramic picture while that of 360° visual angle is called circular panoramic picture. There are also spherical panoramic pictures that, however, while presenting the ground and the sky or the floor and the ceiling in a closed space, respectively, are less informative; thus, the vertical visual angle of 30 to 90° is usually sufficient in practice.

A number of methods for producing and displaying panoramic pictures are known. The oldest known panoramic pictures were made by painting (cyclorama). Technically produced panoramic pictures can be made by means of photography (using wide angle lenses), photography combined with EDP (combining partial panoramic photos by means of software) or a special software (3D test modeling of virtual world). The displaying can be made by magnifying photos, printing, displaying on monitors, projecting or using the means of virtual reality e.g. head mounted display (HMD). The best result is obtained by using HMDs; in fact, thanks to the magnified picture of microdisplays placed before the eyes, the picture appears virtually at a large distance even might as well at the infinite and, by means of an angular sensor (tracker), it is always the segment of as large as 360° picture facing the turning direction that appears to the observer who is able to look around in the virtual space. The disadvantages of HMD are: it shall be worn on head that is inconvenient and shall be in wired connection to a computer; due to the restricted resolution of microdisplays, the pixel structure of the wide-angle magnified picture becomes visible that is disturbing; and due to the restricted frame rate of microdisplays, the transfer of virtual picture becomes interrupted in the case that the HMD is turned round quickly.

The discomfort caused by head mounting is avoided by a stand mounted virtual display described in the Hungarian patent application published under No. P05 00483, the embodiment of which called "chronoscope" is used for presenting the virtual reconstruction of ancient ruins e.g. in the park of ancient ruins in Aquincum (Budapest). Viewing into the telescope-like device while turning it slowly around the axis of its stand, the buildings of Roman age reconstructed by means of computer can be seen at their original places and distances and the present-day view can be compared to the old one while looking repeatedly out of the device. Here again, the device has the disadvantages of restricted resolution and limited frame rate that deteriorate the picture quality. In addition, the device is technically complicated; in fact, it consists of a computer, microdisplays, power source or means connection as well as an electronic angular sensor (encoder) together with an electronic control circuit that make it expensive and service sensitive.

There are also panoramic picture display devices provided with recording tape e.g. film strip that represent the panoramic picture to be displayed on an undivided picture field and the film strip is positioned for displaying by a film feeding mechanism.

In the viewing device shown in Fig 4 of the patent description No. WO9310475, there are two endless loops one of them including the panoramic picture displayed for the left eye and the other for the right eye. Each film loop is forwarded by a roller with axis common to a planet-wheel and the two planet wheels roll down a sun gear while the whole film guide system is turned around the axis of the sun-gear. One of the disadvantages of this solution is that the loops shall be made endless by means of gluing, the rupture of which involves a permanent risk of failure especially in case of outdoor application where the film is exposed to extreme temperature variations, extension and contraction and, at a much frequented place, the users rotate the device as much as several hundred times a day and stretch the loop alternatively in various directions. Especially, turning around the rollers causes high dynamic stresses to the gluing. According to our examinations, glued film loops of this kind are capable of standing stresses for up to several days and their frequent rupture involves complaints on the part of users and results in uncertainty in services. Another disadvantage of the solution is that the sun gear and the planet wheels are arranged at a first level while the film loops and the rollers at a second level causing unnecessary increase in the dimensions of the mechanism. A third disadvantage consists in that two separate film loops are available one for the left eye and another for the right eye; they shall be produced and installed individually and the two film loops shall be synchronized to each other.

The viewing device according to Fig 16 of the patent description No. US 5,153,716 includes a single film loop which contains the panoramic pictures to be displayed for both eyes. The film is guided by three guide rollers, two of which tighten the common film section in front of the ocular lenses. All the three rollers are of common axis with a band wheel, one of them is the driven wheel while the other two ones serve for forwarding the rotation and transmitting it to the rollers. The first disadvantage of the arrangement is that the glued endless film loop involves the risk of rupture with the consequences described in details in the previous paragraph. The second disadvantage is that, here again, the arrangement is of multi-level type due to the cogged belt drive that increases the dimensions and complexity of the mechanism. The third disadvantage is that, as the common film section facing the eyes is straight, the distance between displaying windows facing the left and the right eye-balls, that is preferably equal to the average distance of pupils (approx 65 mm) as also shown in Fig. 18h is too small to allow a panoramic picture of side ratio between 1:10 and 1:15 depending on the vertical visual angle - or more exactly, the identical parts of two neighbouring panoramic pictures that create a picture pair - to be displayed. With the arrangement according to said patent, the problem can only be solved by using much smaller film e.g. microfilm instead of the usual 35 mm film or cinefilm; in such cases, however, the resolution is reduced and, due to the smaller film area that shall be magnified, the exit pupil is smaller, resulting in that the visibility of both pictures cannot be of high quality for users with extreme interpupillary distance (IPD) at the same time. This also relates to the arrangement shown in Fig. 16/a.

When developing our invention, we aimed at creating a simple panoramic picture displaying equipment capable of presenting complete circular panoramic pictures to observers of any IPD by using a single spliceless film strip.

According to our perception, this is implemented by the device defined in independent claim 1, that consists of a film drum and a film guide roller system surrounding it, between the elements of which it is the film itself that represents power- and motion transmission connection, on the one hand, and the film shall be led into an extension loop between the film sections magnified by the lenses, on the other hand. The film drum and the film guide rollers are fastened in a rotatable way to a common base plate where said base plate can be turned around the axis of film drum or the film drum can be turned away in relation to the base plate. Both ends of the film strip are guided and fastened at the same place in a notch made in the mantle of film drum in the direction of generatrix. On the one side of film drum, a first and a second film wind-off rollers located closely to each other and to the film drum are arranged and, on the opposite side of film drum, at least one extension loop roller and in addition, two display window rollers each to tighten the film sections magnified by the lens are arranged.

The operation of the film guiding system according to the invention is as follows: a relative turn is created either by turning the film drum relating to the base plate or by turning the base plate relating to the environment, preferably a film drum fastened to a stand; in this case, one of the film wind-off roller begins to pull one of the film ends that is nearest to it and winds (stresses) more and more film strip onto the mantle of film drum. As the distance between the film guide rollers is constant, the film strip begins to move all the rollers to reduce the distance between the other film wind-off roller at the farther strip end and the other film end. According to our perception, if the perimeter of the film drum is equal to the length of the 360° panoramic picture, one full revolution of film drum implies the advancement of the film strip by one panoramic picture; i.e., in case of a film drum fastened to the environment e.g. to a stand, the view is direction-true in the virtual space.

The advantages of the device according to the invention over the above described other ones are as follows:
1. It is of simple arrangement; any motion transfer device with gear-drive, friction-gear drive, V-belt drive or cogged belt drive arranged at a parallel level are not required.
2. A single film strip is sufficient.
3. The film strip is without splicing; in case of solid fastening of film ends, the film never breaks in practice.
4. Thanks to the installation of an extension loop, the commercially available 35 mm film can also be used for displaying circular panoramic pictures; in fact: a) it is suitable to include 2 contiguous panoramic pictures of 25 to 35 mm length each, while the large film width ensures b) high resolution, c) possibility of wide-angle magnifying without noticeable errors of picture generation and d) large exit pupil sufficient for any IPD.

One exemplary embodiment of the invention consists of a small-size, flat and compact hand-held device for displaying circular panoramic pictures in which the film drum is rotated in relation to the base plate that also includes the lens, film illumination elements and the light protection cover.

In another exemplary embodiment of the invention, the film drum is fastened to a stand bar placed on the ground and the base plate is rotated in relation to the film drum; in this case, the displayed picture is seen at its true place in the real environment, that is, the possibility of having a look round in a virtual space is given.

In the following the invention is described in detail, based on the figures attached.
**Fig. 1** shows the design of film strip used in the equipment according to the invention.
**Fig. 2** shows the top-view of the film-guide system with the film strip being in its central position.
**Fig. 3** shows the sectional view of Fig. 2.

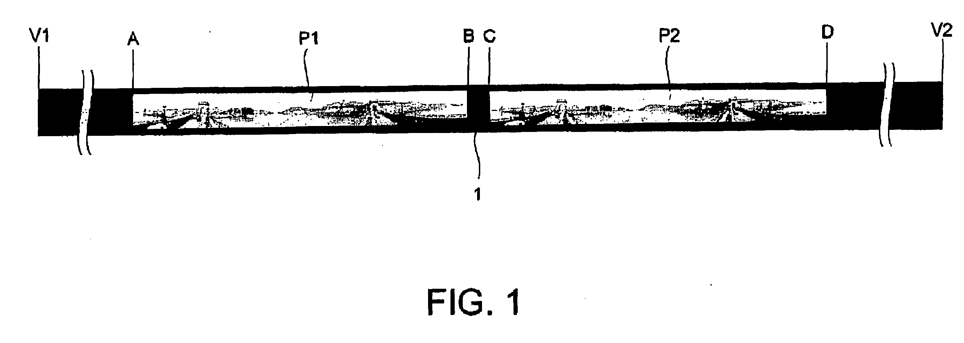

In a proposed exemplary embodiment of the equipment as shown in **Fig. 1**, the panoramic pictures P1 and P2 to be displayed that are of the same representation or form a stereo picture pair are recorded on a 1 film without sprocket holes at the sections A-B and C-D of the film, respectively.

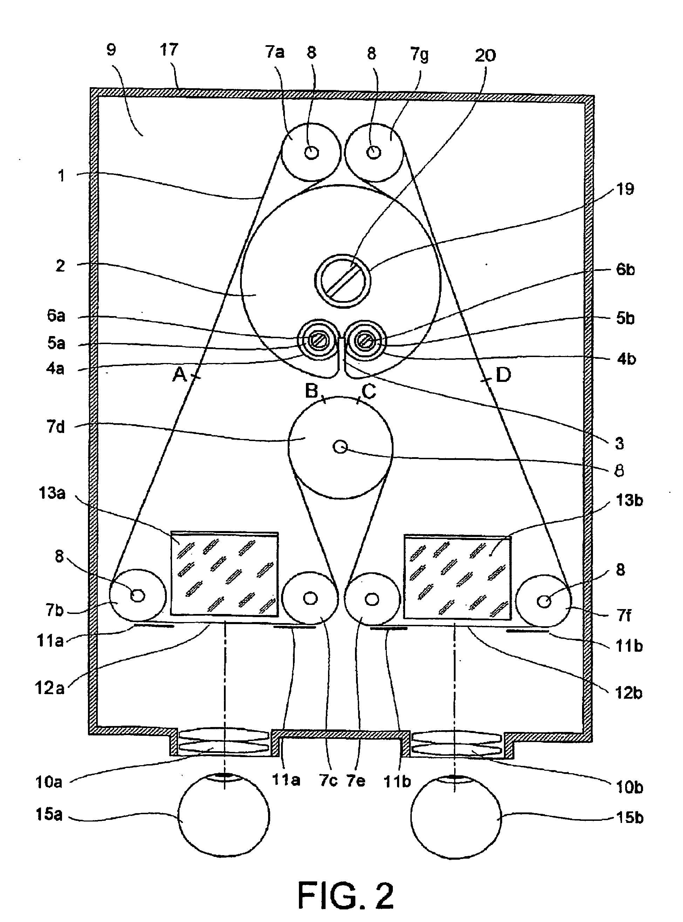

As shown in **Fig. 2**, both ends of the 1 film strip are led through a 3 notch made in the direction of generatrix in the cylinder mantle of 2 film drum machined from a solid body into the 4a, 4b blind holes and wound on the hollow 5a, 5b fixing sleeves that, in turn, are fastened by means of 6a, 6b screws to the threaded holes not represented here that are formed at the bottom of 4a, 4b blind holes. Prior to winding, the V1, V2 film ends are fastened to the mantle surface of 5a, 5b fixing sleeves. At the same time, the 5a, 5b fixing sleeves also allow the 1 film strip to be tightened following its insertion prior to fastening by means of screws. Part of 1 film strip that faces V1 film end reaches through the 3 notch the mantle surface of 2 film drum, passes round the 7a film wind-off roller, 7b and 7c display window rollers, 7d extension loop roller, 7e and 7f display window rollers, 7g film wind-off roller and the mantle surface of 2 film drum and, finally, enters the 3 notch and is wound on the fixed 5b fixing sleeve. The rollers can be rotated around their 8 axes and the 8 axes are inserted to the holes of a common 9 base plate. Similarly, the 10a, 10b lens systems, 11a, 11b picture gates as well as 13a, 13b mirrors enclosing 45° angle with the magnified 12a, 12b film sections, that project the light beams coming from the environment (e.g. lamp) and passing through and diffused by 14a, 14b diffusers each through the 1 film strip towards the 15a, 15b eyes are also fastened to the 9 base plate. The advantage of solution is that no power source is required for transillumination. Of course, built-in film transillumination light sources can also be used. In order to avoid any excessive turning away, motion limit stops not represented here can be used. Note that the film guide system can also include further rollers.

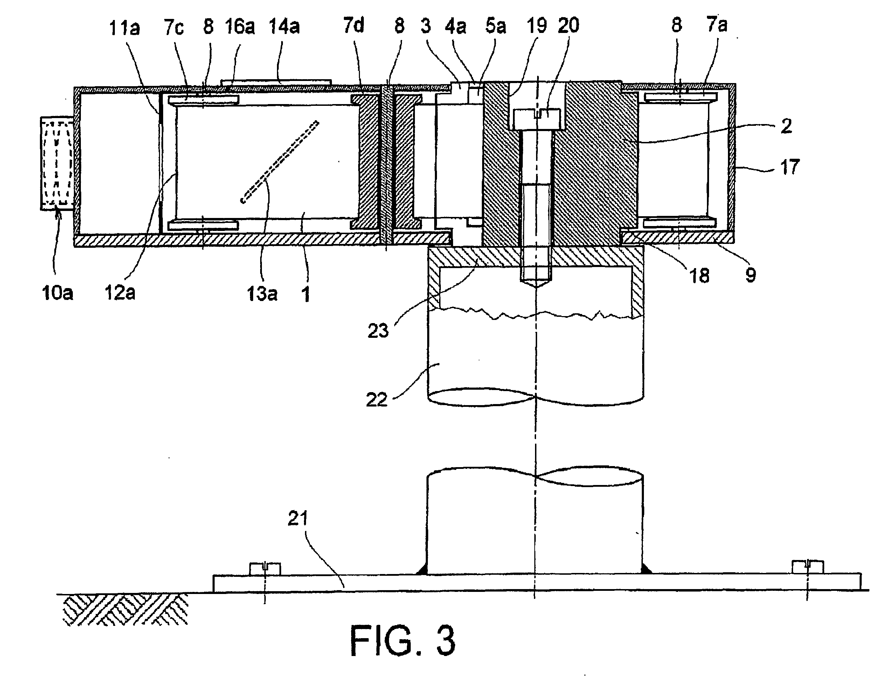

In **Fig. 3**, the 8 axes of rollers, 10a, 10b lens systems, 13a, 13b mirrors and 14a, 14b diffusers mounted on 16a, 16b windows are fastened to the 9 base plate and the 17 cover. The 2 film drum is fastened to the 9 base plate by means of e.g. circumferential 18 rim or a bearing not shown here. For example, the 2 film drum is fastened by means of a 20 fastening screw placed in a 19 stepped hole to a 23 cover plate that closes the upper end of a 22 stand bar preferably of pipe-like design fastened by means of a 21 stay-plate to the ground.

Characterized in respect of operation: when turning the 17 cover away clockwise around the axis of 2 film drum, the 7a film wind-off roller begins to pull the 1 film strip and winds it on the mantle of 2 film drum in more and more length; the turning away can be continued until the 7a film strip off roller reaches the 3 notch or until stopped by a motion limit stop, while pulling along the P1 panoramic picture before the 11 a picture gate and the P2 panoramic picture before the 11b picture gate. The 1 film strip is transilluminated in a way as follows: the light beams coming from outside e.g. from the sun in case of outdoor installation, passing through and diffused by the 14a, 14b diffusers mounted on 16a, 16b windows of 17 cover and refracted by the mirrors 13a, 13b fall on the magnified 12a, 12b film sections and then, through the 11a, 11b picture gates and 10a, 10b lens systems to the 15a, 15b eyes. The transillumination can also be made by means of LCD backlightors that can be supplied by mains, dry batteries, storage batteries, solar cells. The various types of transillumination using natural light or electric bulbs can also be combined e.g. in a way that the mirrors 13a, 13b are semi-transparent and the illuminators installed behind them supplied by storage batteries recharged preferably by means of solar cells are switched on under the control of a light sensor after dark.

The equipment according to Fig. 3 is used in a way that the user has a look into the device set out by means of the 21 stay-plate and 22 stand bar at a pre-selected point of a real environment and turns the 17 cover accommodating the film guide system all around like a telescope; then, the user sees the pictures represented by the 12a, 12b magnified film sections and magnified by the 10a, 10b lens systems at a virtually large distance and merged into a single picture in a way known in case of stereoscopic viewing systems, that show the identical parts of P1 and P2 panoramic pictures.

By harmonizing the environment and the picture content, it can be obtained that the user sees the virtual reality corresponding to the environment accurately in the direction of environmental objects and landscape elements. There might be many possibilities for use. In a park with ancient ruins, the device according to the invention could provide assistance to the visitors in imagining the original town, street or building of ancient times or the middle age in place of the ruins. It might be suitable to be used to demonstrate the future e.g. the sight of a residential park, shopping centre or industrial plant on the site as soon as prior to the commencement of construction work, thus assisting in judging the accommodation of buildings into the environment and their realistic scale. In case of travel agencies, the remote exotic destinations can be demonstrated with an unprecedented realism; at the main squares of towns, the streets of late 19^{th} century can be demonstrated etc. Note that the sight shall not include the whole 360° panoramic picture; by means of motion limit stops, P panoramic pictures of the desired horizontal visual angle can be displayed.

Another exemplary embodiment of the device according to the invention consists in a hand-held small size, compact, environmentally independent device for displaying panoramic pictures. In this device, the 2 film drum is made suitable to be rotated manually, e.g. by elongating it in one direction through the 17 cover, thereby obtaining a rotating disc not shown here. If the user turns the rotating disc around from stop to stop, he/she looks on the whole panoramic picture. In case of mass production, the device can become a cheap mass product that represents e.g. a specific exotic destination and can be sold for tourists.

As an additional element, a power source (solar cell or battery), device for payment (e.g. slot machine) and a mechanism for opening/closing the light path can be installed in the device.

The computer based production of the content can be made in a number of ways: 3D CAD modeling of buildings and landscape elements (e.g. 3DStudio, ArchiCAD software); scanning, setting and retouching of contemporary (e.g. 19^{th} century) photos of sites (e.g. by using Adobe Photoshop software) or by taking 360°photographs of today's landscapes and merging the partial pictures by means of software.

The film strip that carries the content is produced by using a traditional exposition procedure or a special laser based photosetting equipment. In the latter procedure, a computer program is used to direct red, green and blue laser beams by means of semi-transparent mirrors along a common axis to a high speed rotating mirror that writes the picture information supplied by a computer onto a long film strip curved on a cylindrical surface simultaneously, with a resolution of thousands of lines; thus, this procedure allows us to produce the required extra wide panoramic "frame". Instead of film strip, non-transparent picture recording tape made by printing procedure can also be used, that shall be illuminated from the side of 6a, 6b eye-balls.

The invention is not restricted to the exemplary embodiments represented and explained; instead, it can be implemented in several ways within the range of protection defined by the claims.

### Legend

- 1: film strip
- 2: film drum
- 3: notch
- 4a, 4b: blind hole
- 5a, 5b: fixing sleeve
- 6a, 6b: screw
- 7a, 7g: film wind-off roller
- 7b, 7c, 7e, 7f: display window roller
- 7d: extension loop roller
- 8: axis
- 9: base plate
- 10a, 10b: lens system
- 11a, 11b: picture gate
- 12a, 12b: magnified film section
- 13a, 13b: mirror
- 14a, 14b: diffuser
- 15a, 15b: eye-ball
- 16a, 16b: window
- 17: cover
- 18: rim
- 19: stepped hole
- 20: fastening screw
- 21: stay-plate
- 22: stand bar
- 23: cover plate
- V1, V2: film end
- A, B, C, D: film section
- P1, P2: panoramic picture

## Claims

1. Binocular panoramic picture display device that contains a single film strip (1) not made endless, ***characterized in that*** the device includes a cylindrical film drum (2) into the inside of which the two film ends (V1, V2) beside each other are inserted and fastened there; a first and a second film wind-off rollers (7a, 7b) that are arranged close to the film drum (2) and each other; as well as a film strip elongation loop, formed by said single film strip not made endless between the two central display window rollers (7c, 7e) with one or more extension loop rollers (7d), said film strip (1) elongation loop containing panorama pictures (P1, P2) to be disposed in front of the oculars or lens systems (10a, 10b) for the eyes (15a, 15b) of the user.

2. Device as in claim 1, ***characterized in that*** the film drum (2), the wind-off rollers (7a, 7b), the two control display window rollers (7c, 7e) the one or more extension loop rollers (7d) and other film guide rollers ( 7f, 7g) are fastened to a common base plate (9) to allow them to be turned away.

3. Device as in claim 2 ***characterized in that*** it is on the base plate (9) that the lens systems (10a, 10b), picture gates (11a, 11b) and mirrors (13a, 13b) making an angle of 45° with the magnified film sections (12a, 12b) for projecting light beams coming from the environment, e.g. lamp, each passing through and diffused by a diffuser (14a, 14b), through the film strip (1) towards the cye-balls (15a, 15b) of the user, are fastened to.

4. Device as in claim 3, ***characterized in that*** a cover (17) surrounding the film guide system, the mirrors (13a, 13b) and the lens systems (10a, 10b) is fastened to the base plate (9).

5. Device as in claim 1, ***characterized in that*** the film drum (2) includes a notch (3) starting from the cylinder mantle and tending towards the axis of film drum (2), said notch (3) having blind holes (4a, 4b) with axes parallel to the axis of film drum (2) on its two sides; at the bottom of the blind holes (4a, 4b) are arranged threaded holes coaxial to the blind holes (4a, 4b) to which hollow fixing sleeves (5a, 5b) coaxial to the blind holes (4a, 4b), serving for fastening the film ends (V1, V2) and stretching them after winding up, are threaded

6. Device as in claim 1, ***characterized in that*** the film drum (2) is fastened to a stand bar (22).

7. Device as in claim 4, ***characterized in that*** the film drum (2) is elongated through the cover (17) and ends in a rotating disc.

8. Device as in claim 1, ***characterized in that*** it includes any one of solar cell, storage battery, device suitable to be used for payment e.g. slot machine, and a device for opening/closing light path.

## Patentansprüche

1. Vorrichtung zur Darstellung eines binokularen Panoramabildes mit einem einzigen Nicht-Endlos-Filmband (1), **dadurch gekennzeichnet, dass** die Vorrichtung eine Filmtrommel (2), in deren Inneren die beiden Filmenden (V1, V2) nebeneinander angeordnet und dort befestigt sind; eine erste und eine zweite Filmabwickelrolle (7a, 7g), die nah zueinander und zur Filmtrommel (2) angeordnet sind, sowie eine durch das genannte einzige Nicht-Endlos-Filmband gebildete Filmband-Verlängerungsschleife zwischen den beiden mittleren Bildschirmrollen (7c, 7e) mit einer oder mehreren Verlängerungschleifenrollen (7d) enthält, wobei die genannte Verlängerungsschleife des Filmbandes (1) jene Panoramabilder (P1, P2) enthält, die vor den Augenlinsen oder an den zu den Augen (15a, 15b) des Benutzers angebrachten Linsensystemen (10a, 10b) dargestellt werden.

2. Vorrichtung nach Anspruch 1, **dadurch gekennzeichnet, dass** die Filmtrommel (2), die Filmabwickelrollen (7a, 7b), die beiden mittleren Bildschirmrollen (7c, 7e), die eine oder die mehreren Verlängerungschleifenrollen (7d) und andere Filmführungsrollen (7f, 7g) mit einer gemeinsamen Grundplatte (9) drehbar verbunden sind.

3. Vorrichtung nach Anspruch 2, **dadurch gekennzeichnet, dass** eine Grundplatte (9) mit Linsensystemen (10a, 10b), Bildblenden (11a, 11b) sowie mit Spiegeln (13a, 13b), die in einem Winkel von 45° zu vergrößerten Filmabschnitten (12a, 12b) stehen, verbunden sind, welche die aus der Umgebung, z. B. von Lampe her einfallenden Lichtstrahlen, die jeweils einen Diffusor (14a, 14b) passieren und verstreut werden, durch das Filmband (1) in Richtung von Augäpfeln (15a, 15b) des Benutzers werfen.

4. Vorrichtung nach Anspruch 3, **dadurch gekennzeichnet, dass** die Grundplatte (9) mit einem Gehäuse (17) verbunden ist, das das Filmführungssystem, die Spiegel (13a, 13b) und die Linsensysteme (10a, 10b) umschließt.

5. Vorrichtung nach Anspruch 1, **dadurch gekennzeichnet, dass** die Filmtrommel (2) einen bei ihrem Mantel beginnenden und zur Achse der Filmtrommel (2) gerichteten Schlitz (3) beinhaltet, der auf beiden Seiten mit der Achse der Filmtrommel (2) parallelen Sackbohrungen (4a, 4b) aufweist, und der Boden der Sackbohrungen (4a, 4b) über mit den Sackbohrungen (4a, 4b) fluchtende Gewindebohrungen zur Befestigung der Filmenden (V1, V2) und zum Spannen nach dem Aufwickeln vorgesehenen Hohlraummuffen (5a, 5b) durch Schraubverbindung verfügt.

6. Vorrichtung nach Anspruch 1, **dadurch gekennzeichnet, dass** die Filmtrommel (2) mit einer Gerüststange (22) fest verbunden ist.

7. Vorrichtung nach Anspruch 4, **dadurch gekennzeichnet, dass** die Filmtrommel (2) über das Gehäuse (17) hinaus verlängert ist und in einer Drehscheibe (24) endet.

8. Vorrichtung nach Anspruch 1, **dadurch gekennzeichnet, dass** sie mindestens einen der Bestandteile Solarzelle, Batterie, zur Zahlung geeignete Einrichtung, z. B. Münzeinwurfautomat und Gerät zum Öffnen und Schließen des Lichtweges beinhaltet.

## Revendications

1. Dispositif de visualisation pour une image panoramique binoculaire, contenant une bande de film (1) unique n'étant pas infinie, **caractérisé en ce que** le dispositif comporte un tambour de film (2) cylindrique dans l'intérieur duquel les deux extrémités de film (V1, V2) sont introduites l'une à côté de l'autre et fixées là-bas, un premier et un deuxième rouleau de déroulement de film (7a, 7b) étant arrangés à proximité du tambour de film (2) et de l'un à l'autre ainsi qu'une boucle d'allongement de la bande de film (1) formée par la bande de film unique n'étant pas infinie entre les deux rouleaux médiaux (7c, 7e) des fenêtres de visualisation, complété avec un ou plusieurs rouleaux (7d) pour la boucle d'allongement, où la boucle d'allongement de la bande de film (1) contient des images panoramiques (P1, P2) qui sont à arrangées devant les oculaires ou les systèmes de lentilles (10a, 10b) prévus pour les yeux (15a, 15b) de l'utilisateur.

2. Dispositif selon la revendication 1, **caractérisé en ce que** le tambour de film (2), les rouleaux de déroulement de film (7a, 7b), les deux rouleaux médiaux (7c, 7e) des fenêtres de visualisation, l'un ou plusieurs rouleaux (7d) pour la boucle d'allongement et des autres rouleaux-guide de film (7f, 7g) sont fixés à une plaque de base (9) commune de sorte qu'ils puissent être tournés.

3. Dispositif selon la revendication 2, **caractérisé en ce que** sur la plaque de base (9) sont fixés les systèmes de lentilles (10a, 10b), des portes d'image (11a, 11b) et des miroirs (13a, 13b) faisant un angle de 45° avec des sections de film (12a, 12b) agrandies pour projeter des rayons de lumière venant de l'ambiance, par exemple d'une lampe qui traversent et sont diffusés par un diffuseur (14a, 14b) à travers de la bande de film (1) vers les globes de l'oeil (15a, 15b) de l'utilisateur.

4. Dispositif selon la revendication 3, **caractérisé en ce qu'**à la plaque de base (9) est fixé un boîtier (17) entourant le système de guidage de film, les miroirs (13a, 13b) et les systèmes de lentilles (10a, 10b).

5. Dispositif selon la revendication 1, **caractérisé en ce que** le tambour de film (2) comporte une fente (3) partant de sa surface latérale et tendant vers l'axe du tambour de film (2), la fente (3) comportant de part et d'autre des troues borgnes (4a, 4b) avec des axes parallèles à l'axe du tambour de film (2); au fond des troues borgnes (4a, 4b) des trous taraudés sont arrangés coaxialement aux troues borgnes (4a, 4b), dans lesquels des douilles creuses de fixation (5a, 5b) coaxiales aux troues borgnes (4a, 4b) sont vissées pour fixer les extrémités de film (V1, V2) et pour les tendre après l'enroulage.

6. Dispositif selon la revendication 1, **caractérisé en ce que** le tambour de film (2) est fixé à une barre de statif (22).

7. Dispositif selon la revendication 4, **caractérisé en ce que** le tambour de film (2) est allongé à travers du boîtier (17) et se termine dans un disque tournant.

8. Dispositif selon la revendication 1, **caractérisé en ce qu'**il comporte l'une quelconque des pièces constitutives comme une cellule solaire, un accumulateur, un dispositif pouvant être utilisé pour paiement, par exemple un distributeur automatique et un dispositif pour ouvrir/fermer la voie de la lumière.
